# EUROPÄISCHE PATENTSCHRIFT

(11) **EP 2 557 644 B1**
(45) Veröffentlichungstag und Bekanntmachung des Hinweises auf die Patenterteilung: **09.09.2015**
(21) Anmeldenummer: 12005100.8
(22) Anmeldetag: 10.07.2012
(51) Int. Cl.: H02G 1/08, B60R 16/02

(54) **Einführhilfe für Kabel**
Aide à l'introduction pour câble
Insertion aid for cables

(30) Priorität: 09.08.2011 DE 102011109757
(43) Veröffentlichungstag der Anmeldung: 13.02.2013
(73) Patentinhaber: Lipsticks Sportprodukte GmbH, 85221 Dachau (DE)
(72) Erfinder: Pertramer, Siegfried, 80638 München (DE)
(74) Vertreter: von Bülow, Tam

(56) Entgegenhaltungen:
- WO-A1-02/17455
- DE-U1- 29 907 792
- US-A1- 2007 001 157
- US-A1- 2011 140 058
- US-B1- 7 257 889

## Beschreibung

Die Erfindung bezieht sich auf eine Einführhilfe für Kabel gemäß dem Oberbegriff des Patentanspruches 1.

Eine solche Einführhilfe ist aus der DE 299 07 792 U1 bekannt. Solche Einführhilfen werden insbesondere in der Automobilindustrie zum Verlegen von Kabeln und Kabelbäumen in der Autokarosserie eingesetzt. Die bekannten Einführhilfen haben einen langgestreckten Schlauch aus Textilmaterial, in den der zu verlegende Kabelbaum eingelegt wird. Der Schlauch hat üblicherweise einen Reißverschluss oder einen Klettverschluss (vgl. DE 103 08 997 A1). Das in Einfädelrichtung vordere Ende des Schlauches ist mit einem langgestreckten elastisch verbiegbaren Element verbunden. Hierfür werden meist flache Kunststoffstreifen verwendet.

Die US 7,257,889 B1 zeigt eine Einfädelhilfe für Kabel mit einem Kopf, der eine abgerundete Spitze hat und dessen der Spitze abgewandtes Ende mit einem zylindrischen Schaft ausgestattet ist, der durch eine Presspassung mit einem Kunststoffschlauch verbunden ist. In das dem Kopf gegenüberliegende Ende des Schlauches kann ein Kabel oder Kabelbaum mit einer Steckverbindung eingeführt werden. Der Kopf, der Schlauch und das daran befestigte Kabel können in eine geflochtene Umhüllung eingeführt werden.

Zum besseren Einfädeln von Kabelbäumen ist aus der DE 35 24 076 C2 bekannt, das zu verlegende Leitungskabel mit einem Führungsaufsatz zu verbinden, der in seinem vorderen Ende keilförmig ausgebildet ist.

Die DE 8708258 U1 zeigt eine Schutzvorrichtung für ein Kabelende, die als starre länglich gestreckte, einseitig geschlossene Hülse ausgebildet ist, wobei das Kabelende in der Hülse anzuordnen ist.

In der Praxis und insbesondere im Automobilbau werden die benötigten Kabelbäume von externen Zulieferfirmen gefertigt und zusammen mit der bestückten Einführhilfe an weiter verarbeitende Unternehmen geliefert. Nach dem Verlegen der Kabelbäume werden die Einführhilfen entfernt und an den Zulieferanten zurückgesandt. Je nach Anwendungsfall der Kabelbäume müssen die Einführelemente unterschiedliche Länge haben. Weiter haben die Kanäle, in die die Kabelbäume verlegt werden, unterschiedliche Größen und Formen bzw. Verläufe, so daß es wünschenswert ist, die Einführelemente an die individuellen Anforderungen anpassen zu können. Die Einführelemente sollen leicht und ohne Verhaken eingeschoben werden können. Weiter soll der Kabelbaum samt dem Schlauch aus Textilmaterial über das Einführelement an die richtige Position gezogen werden können und schließlich soll nach richtiger Platzierung des Kabelbaumes die Einführhilfe entfernt werden können, während der Kabelbaum an der verlegten Stelle verbleibt.

Um all diese Anforderungen zu erfüllen hat man nach internem Stand der Technik der Anmelderin eine Vielzahl von unterschiedlichen Einführelementen unterschiedlicher Länge verwendet, die mit Kabelbindern an dem Schlauch aus Textilmaterial befestigt wurden. An das in Einführrichtung vorderen Ende wurde eine Kugel mit einem Innengewinde angeschraubt, die auf ein Au-ßengewinde des Einführelementes aufgeschraubt wurde. Je nach konkreter Verlegesituation konnten Kugeln unterschiedlicher Durchmesser verwendet werden. Problematisch ist dabei allerdings die Befestigung der Kugel an einem Außengewinde, das an einem flachen elastisch verbiegbaren Einführelement angebracht ist. Beim Verlegen des Kabelbaumes wird nämlich meist an der Kugel gezogen, die dann abreißt. Auch kommt es vor, daß während des Einführens die Einführhilfe an Kanten oder Vorsprüngen hin- und hergeschoben werden muß, wobei dann die Kugel abreißt und im Einführkanal verbleibt, was später zu Klappergeräuschen führt.

Aufgabe der Erfindung ist es daher die Einführhilfe der eingangs genannten Art dahingehend zu verbessern, daß sie einfach an die individuellen Gegebenheiten anpaßbar ist und ein einfaches und sicheres Einführen von Kabeln bzw. Kabelbäumen ermöglicht.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung liegt darin, das dem Schlauch abgewandte Ende des Einführelementes mit einem verdickten Kopf zu versehen, der einstückig an dem Einführelement angebracht, beispielsweise angespitzt ist.

Über den verdickten Kopf können die benötigten Zugkräfte aufgebracht werden, die nur noch vom Material und der Dimensionierung des Einführelementes abhängen.

Vorzugsweise hat der Kopf Einrastvertiefungen, an denen eine abgerundete Kappe mit Einrastnasen befestigt wird, die den Kopf teilweise übergreift.

Die abgerundete Kappe kann unterschiedliche Form haben, so daß lediglich für den individuellen Einsatzzweck unterschiedliche Kappen verwendet werden müssen, ansonsten aber einheitliche Einführelemente verwendet werden. Die Kappe ist durch die Rastnasen fest an dem Kopf angebracht und kann auch bei Hin- und Herbewegung und insbesondere bei Zugkräften nicht abfallen.

Nach einer Weiterbildung der Erfindung ist auch die Länge des Einführelementes beliebig einstellbar und die Verbindung zu dem Einführelement und dem Schlauch aus Textilmaterial reißfest ausgebildet. Hierzu ist am vorderen Ende des Schlauches ein Verbindungselement befestigt, in das das dem Kopf gegenüberliegende Ende des Einführelementes eingeführt und dort befestigt wird. Überschüssige Längen des Einführelementes werden vorher abgeschnitten.

Im folgenden wird die Erfindung anhand der Zeichnung im Zusammenhang mit mehreren Ausführungsbeispielen ausführlicher erläutert. Es zeigt:
- Fig. 1: eine teilweise abgeschnittene perspektivische Darstellung eines Ausführungsbeispieles der Einführungshilfe nach-der Erfindung;
- Fig. 2: eine vergrößerte teilweise abgeschnittene Ansicht von Vorder- und Hinterteil eines Einführelementes;
- Fig. 3: einen Querschnitt des Kopfes eines Einführelementes;
- Fig. 4: eine Draufsicht des Kopfes des Einführelementes;
- Fig. 5: eine Ansicht einer abgerundeten Kappe eines Einführelementes nach einem weiteren Ausführungsbeispiel der Erfindung.

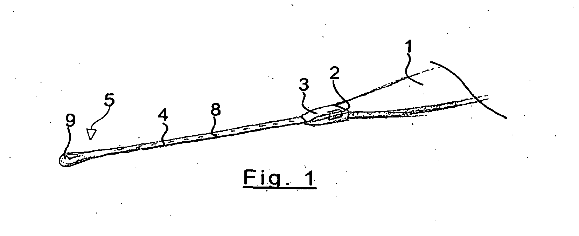

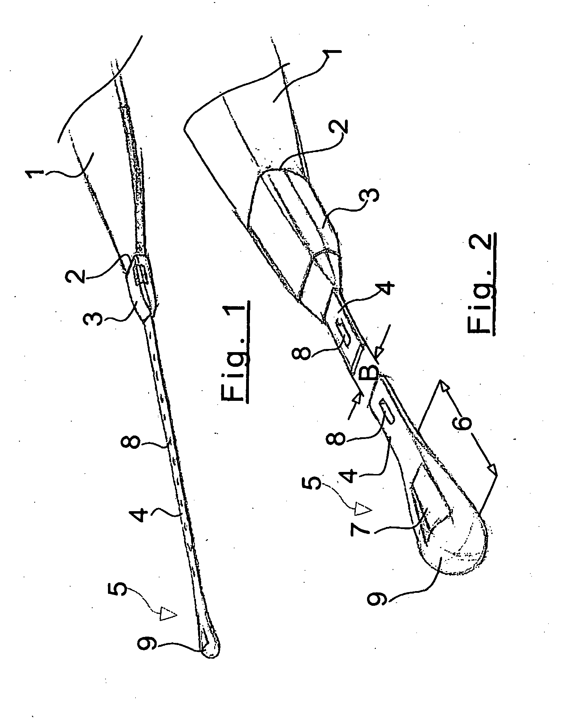

Die Fig. 1 und 2 zeigen einen Abschnitt eines Schlauches 1 aus Textilmaterial, in dessen Inneren ein nicht dargestelltes Kabel bzw. ein Kabelbaum angeordnet ist. Ein Ende 2 des Schlauches 1 ist mit einem Verbindungselement 3 verbunden, das den Schlauch 1 mit einem Einführelement 4 verbindet. Das Einführelement 4 ist ein langgestreckter, elastisch verbiegbarer Kunststoffkörper, der als flaches Band ausgebildet ist, das in Längsrichtung jedoch eine solche Steifigkeit hat, daß es von seinem hinteren Ende, das mit dem Verbindungselement 3 verbunden ist, durch schmale Hohlräume oder Rohre vorgeschoben werden kann, ohne dabei abzuknicken. Auch ist es so stabil, daß es erhebliche Zugkräfte übertragen kann, die für das Einziehen eines Kabelbaumes samt dem Schlauch 1 durch enge Rohre oder Hohlräume ermöglicht.

Ein dem Schlauch 1 abgewandtes vorderes Ende des Einführelementes 4 hat einen verdickten Kopf 5 mit einer abgerundeten Spitze, die beispielsweise unter anderem etwa die Form einer Halbkugel 9 aufweist. Der größte Durchmesser des Kopfes 5 an dessen Spitze 9 ist dabei größer als die Breite B des Einführelementes 4 und wesentlich größer als die Materialdicke des Einführelementes 4. Der verdickte Kopf 5 ist einstückig an dem Einführelement 4 angeformt, wobei das Einführelement 4 und der Kopf 5 beispielweise im Kunststoffspritzguß hergestellt werden. Der verdickte Kopf 5 hat ausgehend von seiner abgerundeten Spitze 9 einen Übergangsbereich 6, der einen sanften Übergang von der Spitze zu dem Einführelement 4 bildet. Der Kopf 5 ist somit "stromlinienförmig" ausgebildet und mit dem Einführelement 4 verbunden, so dass dessen Einführen auch in stark gekrümmte oder mit scharfen Kanten versehene Hohlräume ohne ein Verhaken oder Festklemmen gewährleistet ist.

Weiter hat der Kopf 5 im Übergangsbereich Ausnehmungen 7, die später erläutert werden. Schließlich erkennt man noch, daß das Einführelement 4 in seiner Längserstreckung eine Vielzahl von Löchern 8 hat.

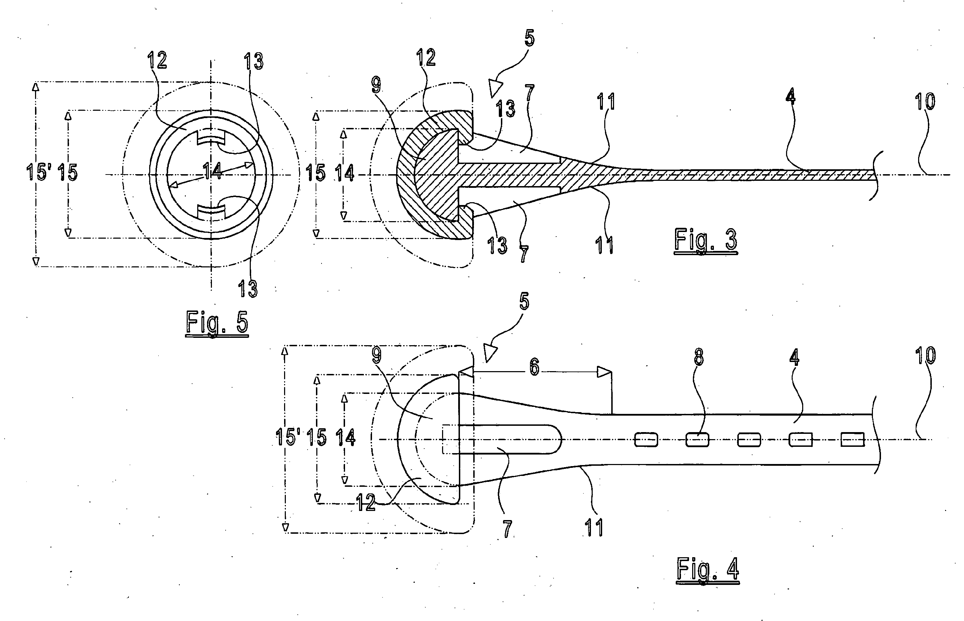

Die Fig. 3 und 4 zeigen den verdickten Kopf 5 und einen abgeschnittenen Teil des Einführelementes 4. Der verdickte Kopf 5 ist einstückig an dem Einführelement 4 angeformt und hat hier eine in etwa halbkugelförmige Spitze 9. Generell ist die Spitze abgerundet und kann daher auch andere Formen haben, wie z.B. Ellipsoid oder Oval. Allgemeiner ist die Spitze 9 als Körper mit glatter, stetig differenzierbarer, konvexer Außenkontur ausgebildet, der vorzugsweise rotationssymmetrisch ist.

An den größten Durchmesser 14 der in Fig. 3-5 gezeigten der halbkugelförmigen Spitze 9 schließt sich ein Übergangsbereich 6 an, dessen Länge mindestens dem Durchmesser 14 der Spitze 9 entspricht und der in beiden Ansichten der Fig. 3 und 4 schräg gegenüber der Mittelachse 10 verläuft und mit einer Rundung 11 in das Einführelement 4 übergeht. Damit wird ein sanfter "stromlinienförmiger" Übergangsbereich geschaffen, der ein Verhaken des verdickten Kopfes 5 während des Einführens und ggf. Vor- und Rückbewegungen verhindert.

Um das Einführelement 4 mit verdicktem Kopf 5 gut und verhakungsfrei durch Rohre und Hohlräume, die auch scharfe Ecken oder Kanten haben können, einführen zu können, ist es zweckmäßig, die Dicke des Kopfes 5 an die Größe und Kontur der Hohlräume anzupassen. Bei sehr kleinem Durchmesser des Kopfes 5 kann es vorkommen, daß der Kopf 5 an einer Kante anstößt und das Einführen des Kabelbaumes erschwert. Zur Anpassung des effektiven Durchmessers des Kopfes 5 ist daher eine Kappe 12 vorgesehen, die auf den Kopf 5 aufgesetzt werden kann. Zu diesem Zweck hat der Kopf 5 Ausnehmungen 7, in die jeweils eine Rastnase 13 der Kappe 12 eingreift und damit die Kappe 12 formschlüssig an dem Kopf 5 hält.

Die Innenform der Kappe 12 ist an die Außenform 14 der Spitze 9 angepasst. Die Außenform der Kappe 12 ist dagegen an den individuellen Anwendungsfall angepaßt. Man benötigt daher nur eine Form des verdickten Kopfes 5 und kann durch Aufsetzen von Kappen 12 unterschiedlichen Außendurchmessers 15, 15' die Anpassung an den individuellen Anwendungsfall vornehmen, was durch gestrichelte Linien in Fig. 3-5 mit dem Durchmesser 15' dargestellt ist. Die Kappen 12 sind vorzugsweise ebenfalls aus flexiblem Kunststoff, der soweit flexibel ist, daß die Rastnasen 13 über die Spitze 9 geschoben und in die Ausnehmungen 7 einrasten können. Durch die formschlüssige Verbindung zwischen der Kappe 12 und dem Kopf 5 können auch beachtliche Zugkräfte zwischen Kappe 12 und Kopf 5 aufgenommen werden, ohne daß die Kappe 12 abgerissen wird. Damit ist sichergestellt, daß die Kappe 12 bei Vor- und Zurückbewegung während des Einführens nicht entfernt werden kann. Weiter ist sichergestellt, daß auch beim Ziehen an der Kappe 12, um den Kabelbaum samt Schlauch durch einen Hohlraum zu bewegen, die Kappe 12 nicht abgerissen wird.

## Patentansprüche

1. Einführhilfe für Kabel mit einem Schlauch'(1), der mit einem langgestreckten elastisch verbiegbaren Einführelement (4) verbunden ist, wobei ein dem Schlauch (1) abgewandtes Ende des Einführelementes (4) einen verdickten Kopf (5) aufweist, der eine abgerundete Spitze (9) aufweist,
**dadurch gekennzeichnet,**
**dass** der Schlauch (1) aus Textilmaterial ist,
**dass** das Einführelement (4) als langgestrecktes, elastisch verbiegbares flaches Band ausgebildet ist,
**dass** der verdickte Kopf (5) einstückig mit dem Einführelement (4) verbunden ist
**dass** die abgerundete Spitze (9) des Kopfes (5) einen Durchmesser (14) aufweist, der größer ist als die Breite (B) des Einführelementes (4),
**dass** die abgerundete Spitze (9) durch einen Übergangsbereich (6) mit dem Einführelement (4) verbunden ist und
**dass** dieser Übergangsbereich (6) sich über eine Länge erstreckt, die mindestens dem Durchmesser (14) der Spitze (9) entspricht.

2. Einführhilfe nach Anspruch 1, **dadurch gekennzeichnet, dass** die abgerundete Spitze (9) eine stetig differenzierbare, glatte und konvexe Außenkontur hat.

3. Einführhilfe nach Anspruch 2, **dadurch gekennzeichnet, dass** die Spitze '(9) rotationssymmetrisch ist.

4. Einführhilfe nach einem der Ansprüche 1 bis 3, **dadurch gekennzeichnet, dass** der Kopf (5) Rastvertiefungen (7) aufweist, zur Aufnahme von Rastnase (12) einer Kappe (12).

5. Einführhilfe nach Anspruch 4, **dadurch gekennzeichnet, dass** die Innenform der Kappe (12) an die Außenform (14) der Spitze(9) angepasst ist.

6. Einführhilfe nach einem der Ansprüche 3 bis 5, **dadurch** gekenntzeichnet, **dass** die Spitze (9) halbkugelförmig ausgebildet ist.

## Claims

1. Insertion aid for cables with a hose (1) that is connected with an enlongated, elastically bendable inlet element (4), wherein an end of the inlet element (4) averted from the hose (1) comprises a thickened head (5) that comprises a rounded tip (9),
**characterized in**
**that** the hose (1) is made of textile material,
**that** the inlet element (4) is formed as stretched, elastically bendable flat strap,
**that** the thickened head (5) is connected in one piece with the inlet element (4),
**that** the rounded tip (9) of the head (5) comprises a diameter (14) that is larger than the width (B) of the inlet element (4),
**that** the rounded tip (9) is connected with the inlet element (4) by a transfer zone (6),
**that** this transfer zone (6) stretches across a length that corresponds at least to the diameter (14) of the tip.

2. Insertion aid according to claim 1, **characterized in that** the rounded tip (9) has a continuously differentiable, smooth and convex outer contour.

3. Insertion aid according to claim 2, **characterized in that** the tip (9) is rotationally asymmetric.

4. Insertion aid according to one of the claims 1 to 3 **characterized in that** the head (5) comprises snap recesses to accommodate a snap tab (12) of a cap (12).

5. Insertion aid according to claim 4, **characterized in that** the inner shape of the cap (12) is fitted to the outer shape (14) of the tip (9).

6. Insertion aid according to one of the claims 3 to 5, **characterized in that** the tip (9) is formed in the shape of a hemisphere.

## Revendications

1. Dispositif d'insertion pour câble, avec un tube (1) relié à un élément d'insertion allongé élastiquement flexible (4), une extrémité de l'élément d'insertion (4) située à l'opposé du tube (1) comportant une tête épaissie (5), qui présente une pointe arrondie (9),
**caractérisé**
**en ce que** le tube (1) est en matière textile,
**en ce que** l'élément d'insertion (4) est réalisé sous forme d'une bande plate allongée élastiquement flexible,
**en ce que** la tête épaissie (5) est reliée en une pièce à l'élément d'insertion (4)
**en ce que** la pointe arrondie (9) de la tête (5) comporte un diamètre (14) qui est plus grand que la largeur (B) de l'élément d'insertion (4),
**en ce que** la pointe arrondie (9) est reliée à l'élément d'insertion (4) par une zone de transition (6), et
**en ce que** cette zone de transition (6) s'étend sur une longueur qui correspond au moins au diamètre (14) de la pointe (9).

2. Dispositif d'insertion selon la revendication 1, **caractérisé en ce que** la pointe arrondie (9) présente un contour extérieur continûment différentiable, lisse et convexe.

3. Dispositif d'insertion selon la revendication 2, **caractérisé en ce que** la pointe (9) est symétrique en rotation.

4. Dispositif d'insertion selon l'une des revendications 1 à 3, **caractérisé en ce que** la tête (5) comporte des cavités d'encliquetage (7), pour l'engagement de nez d'accrochage (12) d'un capuchon (12).

5. Dispositif d'insertion selon la revendication 4, **caractérisé en ce que** la forme intérieure du capuchon (12) est adaptée à la forme extérieure (14) de la pointe (9).

6. Dispositif d'insertion selon l'une des revendications 3 à 5, **caractérisé en ce que** la pointe (9) est de forme hémisphérique.
